# FASCICULE DE BREVET EUROPEEN

(11) **EP 1 768 864 B1**
(45) Date de publication et mention de la délivrance du brevet: **15.07.2009**
(21) Numéro de dépôt: 05758818.8
(22) Date de dépôt: 13.06.2005
(51) Int. Cl.: B60H 3/00

(54) **DISPOSITIF DE TRAITEMENT ÉQUIPANT UN FILTRE À PARTICULES OU UN FILTRE COMBINÉ D'UNE INSTALLATION DE CHAUFFAGE, DE VENTILATION ET/OU DE CLIMATISATION POUR HABITACLE DE VÉHICULE.**
LUFTBEHANDLUNGSVORRICHTUNG FÜR EINEN PARTIKELFILTER EINER HEIZ-, BELÜFTUNGS- UND/ODER KLIMAANLAGE FÜR EINEN FAHRZEUGFAHRGASTRAUM
AIR TREATMENT DEVICE FOR A PARTICLE FILTER OF A HEATING, VENTILATION AND/OR AIR-CONDITIONING SYSTEM FOR A VEHICLE PASSENGER COMPARTMENT

(30) Priorité: 01.07.2004 FR 0407284
(43) Date de publication de la demande: 04.04.2007
(73) Titulaire: Valeo Systèmes Thermiques, 78321 Le Mesnil St Denis Cedex (FR)
(72) Inventeur: ELLIOT, Gilles, F-91080 Courcouronnes (FR); LADRECH, Frédéric, F-78310 Maurepas (FR); GIRAUD, Frédéric, F-78610 Le perray en Yvelines (FR)
(74) Mandataire: Léveillé, Christophe
(86) Numéro de dépôt international: PCT/IB2005/002152
(87) Numéro de publication internationale: WO 2006/003515

(56) Documents cités:
- WO-A-20/04096588
- FR-A- 2 807 973
- US-A- 3 992 892
- US-A- 5 240 487
- US-A- 6 117 218
- US-A1- 2002 197 187
- PATENT ABSTRACTS OF JAPAN vol. 2003, no. 12, 5 décembre 2003 (2003-12-05) -& JP 2004 210087 A (ZEXEL VALEO CLIMATE CONTROL CORP), 29 juillet 2004 (2004-07-29)

## Description

### Domaine technique de l'invention.

L'invention est du domaine des dispositifs de traitement de l'air que comportent les installations de chauffage, de ventilation et/ou de climatisation pour habitacle de véhicule. Elle a pour objet un ensemble filtre/dispositif de traitement de l'air mettant en oeuvre un agent de traitement des surfaces susceptibles d'abriter des développements de microorganismes, telles que les surfaces d'un filtre et/ou d'un évaporateur, que comportent de telles installations.

### Etat de la technique.

Un problème général posé dans le domaine des installations de chauffage, de ventilation et/ou de climatisation pour habitacle de véhicule, concerne le traitement des surfaces de l'évaporateur et des filtres, tels que filtre à particules ou filtre combiné, qui sont susceptibles d'abriter des développements de microorganismes. Cette installation génère des odeurs, qui sont véhiculées par le flux d'air vers l'habitacle du véhicule, et qui occasionnent une gêne pour les passagers. Ces odeurs sont provoquées non seulement par les phénomènes d'adsorption et de désorption de polluants gazeux, mais aussi par la croissance des micro-organismes susvisés.

Pour éviter un tel développement des micro-organismes, il est connu d'appliquer un traitement spécifique pour le filtre, préalablement à la mise en place de ce dernier à l'intérieur de l'installation. Pour ce qui est des odeurs, il est connu d'utiliser des désodorisants ou des bombes anti-septiques.

Il ressort à l'usage que ces traitements de l'installation ne sont pas satisfaisants quant à leur pérennité, avec pour conséquence un renouvellement fréquent de leur application. En outre, fleur efficacité est douteuse et aléatoire pour les zones colonisées par les micro-organismes. De plus, les traitements couramment appliqués n'étant pas préventifs, leur fréquence d'application en est d'autant plus rendue indispensable.

Il a aussi été proposé d'adjoindre à l'ossature du filtre un compartiment de réception d'un dispositif de traitement de l'air par diffusion d'un agent traitant. Des inconvénients de telles dispositions résident dans son encombrement qui restreint pour un volume disponible donné celui de la structure filtrante même du filtre. En outre, le dispositif, pour son implantation, nécessite une modification de l'agencement même du filtre, avec pour conséquence de ne pas le rendre adaptable à un quelconque filtre existant. Un exemple de dispositif de traitement de l'air est décrit dans le document US 200210197187.

### Objet de l'invention.

Le but de la présente invention est de proposer un ensemble filtre/dispositif de traitement de l'air d'une installation de chauffage, de ventilation et/ou de climatisation pour habitacle de véhicule, selon la revendication 1, pour éviter le développement de micro-organismes.

Il est plus particulièrement proposé par la présente invention un tel ensemble filtre/dispositif de traitement de l'air qui ne présente pas un encombrement inopportun, qui ne gêne en rien la mise en place du filtre dans l'installation, qui soit implantable à l'intérieur d'une quelconque installation existante par voie de fixation sur le filtre, et dont l'efficacité soit pérenne, fiable et aisément renouvelable.

L'ensemble filtre/dispositif de traitement de l'air de la présente invention est destiné à équiper une installation de chauffage, de ventilation et/ou de climatisation pour habitacle de véhicule, afin d'éviter le développement de micro-organismes.

On notera à ce stade de la description que ledit filtre comprend notamment une structure filtrante à replis appelée autrement média filtrant. Cette structure filtrante est plus particulièrement supportée par une ossature globalement agencée en cadre dans l'évidement duquel s'étend la structure filtrante. On notera aussi que ledit filtre est susceptible d'être un filtre à particules ou un filtre combiné à effet traitant physico.chimique, tel qu'un filtre associant du charbon actif avec une structure de filtration mécanique des particules.

Dans sa généralité, le dispositif de la présente invention est reconnaissable en ce qu'il est principalement constitué d'un réservoir perméable à agent traitant volatil. Le dispositif comprend en outre des moyens de fixation du réservoir sur le filtre entre des replis de la structure filtrante de ce dernier. Ces dispositions sont telles que le réservoir peut être installé sur un quelconque filtre d'une installation existante, pour éviter le développement de micro-organismes sur les surfaces d'un telle installation.

Le réservoir est préférentiellement disposé au sein de la structure filtrante, dans l'espace de son volume interne délimité par son encombrement hors tout.

On notera que l'agent traitant a notamment des propriétés anti-bactériennes et/ou anti-fongicides. Cet agent traitant est aussi susceptible de présenter des propriétés odorisantes pour parfumer l'air de l'habitacle du véhicule, isolément ou en combinaison avec les autres propriétés qui ont été énoncées.

Selon une première variante de réalisation des moyens dé fixation, ceux-ci sont constitués par au moins un organe de prise du réservoir sur la structure filtrante.

Plus particulièrement, ledit organe de prise est constitué d'une attache de saisie d'un repli de la structure filtrante, agencée par exemple en agrafe. Cette attache est par exemple indifféremment du type à pression, du type à pince, du type à organe coopérant d'emboîtement, et/ou du type à clou perforant, ou autre attache de type analogue.

Selon une première forme de réalisation, le réservoir est équipé à au moins l'une de ses extrémités d'un dit organe de prise, et de préférence à chacune de ses extrémités pour son maintien idoine dans le plan général de la structure filtrante. Selon une deuxième forme de réalisation, l'attache est un élément amovible de fixation du réservoir par serrage conjoint de ce dernier et au moins un repli de la structure filtrante.

Selon une troisième variante de réalisation des moyens de fixation, ceux-ci sont du type par collage du réservoir sur la structure filtrante. Par exemple, le réservoir est équipé à au moins l'une de ses faces d'un papier adhésif pour sa fixation sur un repli de la structure filtrante, la face adhésive du papier étant préférentiellement munie d'un film de protection extemporanément retirable.

Selon une quatrième variante de réalisation des moyens de fixation, ceux-ci sont constitués par au moins un organe de maintien du réservoir sur l'ossature du filtre, et plus particulièrement à un côté du cadre de cette dernière. On notera que le réservoir est préférentiellement maintenu par chacune de ses extrémités à deux côtés opposés respectifs de ce cadre, pour un maintien idoine du réservoir dans le plan général de la structure filtrante.

Cet organe de maintien est avantageusement sécable à une longueur désirée pour être d'une longueur ajustable extemporanément à une quelconque dimension d'ossature de filtre, au moment de l'installation du réservoir sur le filtre.

Selon une forme préférée de réalisation du réservoir, celui-ci est muni d'une trappe d'accès à son volume intérieur pour le renouvellement de l'agent traitant qu'il contient. Cette trappe d'accès est par exemple formée à partir d'une paroi articulée du réservoir, dégageant en position d'ouverture un accès au volume intérieur du réservoir.

Selon une première forme de réalisation, le réservoir contient de préférence un élément support de l'agent traitant à l'état liquide, élément poreux notamment. Le renouvellement de l'agent traitant est susceptible d'être réalisé par remplacement de l'élément poreux préalablement imbibé d'agent traitant, ou encore par apport d'une dose d'agent traitant sur l'élément poreux disposé à l'intérieur du réservoir.

Selon une deuxième forme de réalisation, les moyens de fixation sont du type facilement réversible, tel que par exemple constitués par l'élément d'attache amovible susvisé ou autre moyens de fixation analogues, pour le renouvellement de l'agent traitant par remplacement du réservoir.

Le réservoir est préférentiellement en matériau microporeux, pour lui conférer sa perméabilité. Selon une autre variante de réalisation, la perméabilité du réservoir lui est conférée par des ajours, à travers lesquels est libéré l'agent traitant.

### Description des figures.

La présente invention sera mieux comprise à la lecture de la description qui va en être faite d'exemples de réalisation, en relation avec les figures des planches annexées, dans lesquelles :
La fig.1 est une illustration en perspective d'un ensemble filtre/dispositif de traitement de l'air selon l'invention comprenant un dispositif de traitement d'air d'une installation de chauffage, de ventilation et/ou de climatisation pour habitacle de véhicule, implanté dans les replis d'une structure filtrante d'un filtre à particules.
Les fig.2 à fig.5 sont des illustrations d'exemples respectifs de réalisation des moyens de fixation d'un dispositif représenté sur la fig.1, à l'intérieur du volume délimité par la structure filtrante sur laquelle le dispositif est implanté.
Les fig.6 à fig.11 sont des illustrations schématiques de différentes variantes de réalisation des moyens de fixation du type de ceux représentés sur la fig.5.

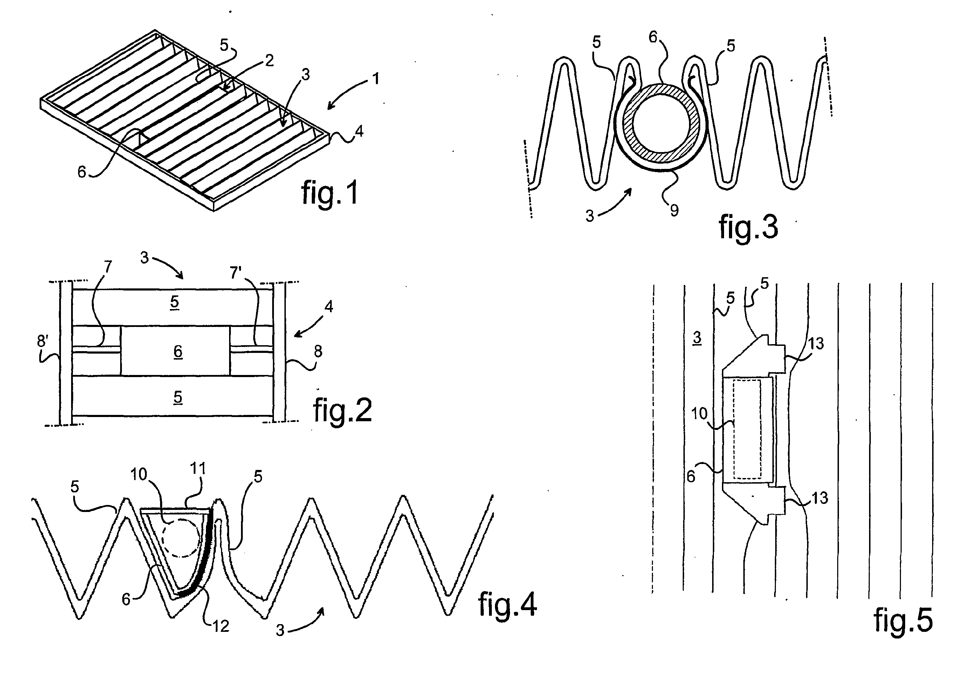

Sur la fig.1; un filtre 1 à particules, filtre combiné ou filtre analogue de traitement de l'air circulant à travers une installation de chauffage, de ventilation et/ou de climatisation pour habitacle de véhicule, est équipé d'un dispositif 2 de traitement de l'air qui traverse le filtre 1, de traitement de la structure filtrante 3 de ce dernier 1 à rencontre du développement de micro-organismes et de traitement des surfaces d'un évaporateur traversées par le flux d'air à rencontre du développement de micro-organismes. Ce filtre 1 est principalement constitué d'une ossature 4 globalement agencée en cadre, à duquel cadre s'étend la structure filtrante 3, ou média filtrant. On notera que cette structure filtrante 3 est du type comportant une pluralité de replis 5 ou analogues et que pour faciliter le montage en tiroir du filtre à particules 1, cette structure filtrante 3 délimite un volume globalement plan n'excédant pas le volume délimité par l'ossature 4.

Le dispositif 2 de traitement de l'air est principalement constitué d'un réservoir 6 microporeux contenant un agent traitant volatil, qui est maintenu entre deux replis 5 successifs de la structure filtrante 3. On notera que selon un avantage de la présente invention, ce dispositif 2 est contenu dans le plan global délimité par la structure filtrante 3, pour ne pas gêner l'installation du filtre 1. Le dégagement de l'agent filtrant s'opère principalement lors des phases d'arrêt de l'installation de ventilation, chauffage et/ou climatisation.

Sur les fig.2 à fig.5, le réservoir 6 est équipé de moyens de fixation sur le filtre à particules, illustrés selon différents modes respectifs de réalisation.

Sur la fig.2, le réservoir 6 est équipé d'un organe de maintien 7,7' sur l'ossature 4, et plus particulièrement sur deux côtés opposés 8,8' du cadre. Cet organe de maintien 7,7' est constitué d'un couple d'ailes de fixation ménagées à chacune des extrémités du réservoir 6. Ces ailes de fixation 7,7' sont sécables pour permettre d'ajuster leur longueur à une quelconque dimension d'un filtre à particules 1 existant. On notera que selon une forme préférée de réalisation, le réservoir 6 est maintenu par emboîtement entre les côtés 8,8' du cadre 4 par l'intermédiaire des ailes de fixation 7,7', pour permettre son installation sur un quelconque filtre à particules 1 déjà mis en place sur un véhicule. Cependant et selon une autre forme de réalisation, la dimension de l'organe de maintien 7,7' est ajustée selon les dimensions d'un quelconque filtre à particules 1, sur l'ossature 4 duquel il est fixé lors de la fabrication de ce dernier 1, par collage, par soudage, voire par surmoulage ou fixation analogue.

Sur la fig.3, le réservoir 6 est équipé d'une ou plusieurs attaches amovibles 9 de saisie conjointement du réservoir 6 et d'au moins un repli 5 de la structure filtrante 3. Cette attache amovible 9 est notamment constituée d'un clip qui enserre ensemble un repli 5 de la structure filtrante 3 et le réservoir 6, celui-ci étant préférentiellement d'une section cylindrique. Cette forme de réalisation permet un renouvellement de l'agent traitant à partir d'un remplacement aisé du réservoir 6.

Sur les fig.4 et fig.5, le réservoir 6 contient un élément support 10 de l'agent traitant à l'état liquide. Sur la fig.4 plus particulièrement, le réservoir 6 comporte une trappe d'accès 11 à son volume intérieur pour le renouvellement de l'agent traitant. On notera que cette trappe 11 est susceptible d'être avantageusement formée d'un paroi articulée du réservoir 6, avec lequel elle constitue un ensemble monobloc obtenu par moulage, d'une matière plastique notamment et plus particulièrement d'un polypropylène microporeux.

Sur la fig.4 encore, le réservoir 6 est fixé par l'intermédiaire d'une bande d'encollage 12 sur l'un des replis 5 de la structure filtrante 3. Cet encollage 12 est notamment réalisé par l'intermédiaire d'un film adhésif double face.

Sur la fig.5, le réservoir 6 est équipé à chacune de ses extrémités d'une attache de fixation 13 sur un repli 5 de la structure filtrante 3.

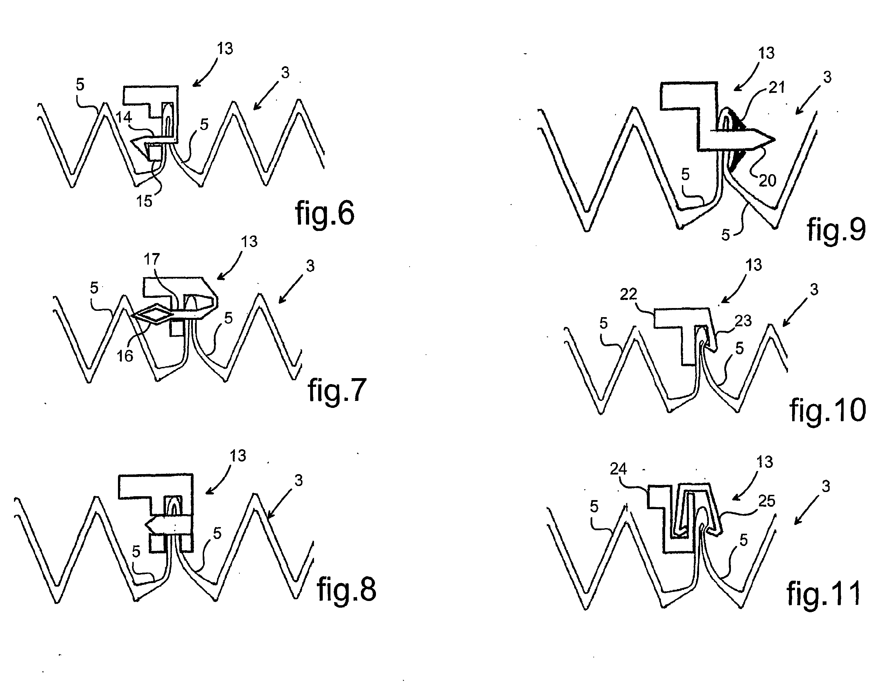

Sur les fig.6 à fig.9, l'attache 13 est du type comportant un perforateur traversant le repli 5 de la structure filtrante 3, et coopérant avec un organe de retenue.

Sur la fig.6, le perforateur est organisé en crochet 14 coopérant avec un doigt 15 de retenue.

Sur la fig.7, le perforateur est organisé en crochet 16 dont la tête est élastiquement déformable. L'attache 13 comporte une ouverture 17 à travers laquelle pénètre la tête du perforateur déformé 16, qui se trouve ensuite spontanément retenu en reprenant sa conformation initiale.

Sur la fig.8, le perforateur est constitué d'un doigt 18 indépendant formant clavette logé à l'intérieur d'un logement 19 que comporte l'attache 13.

Sur la fig.9, le.perforateur est un doigt 20 indépendant qui est retenu au moyen d'une rondelle de serrage 21.

Sur les fig.10 et fig.11, l'attache 13 est organisée selon la forme générale d'une pince. Sur la fig.10, la pince est constituée d'un organe monobloc 22 comportant un crochet élastique 23, tandis que sur la fig.11, l'attache 13 est constituée d'un couple d'éléments coopérants 24 et 25 entre eux pour saisir un repli 5 de la structure filtrante 3.

## Revendications

1. Ensemble filtre/dispositif de traitement de l'air comprenant un filtre d'une installation de chauffage, de ventilation et/ou de climatisation pour habitacle de véhicule ayant une structure filtrante (3) comportant une pluralité de replis (5), **caractérisé en ce que** le dispositif de traitement est destiné à équiper le filtre (1), et est constitué d'un réservoir (6) perméable à agent traitant volatil, et comprenant des moyens de fixation du réservoir (6) sur le filtre (1) entre des replis de la structure filtrante (3) le réservoir (6) étant maintenu entre deux replis (5) successifs de la structure filtrante (3).

2. Ensemble filtre/dispositif de traitement de l'air selon la revendication 1, **caractérisé en ce que** le réservoir est disposé au sein de la structure filtrante (3) dans l'espace de son volume interne délimité par son encombrement hors tout.

3. Ensemble filtre/dispositif de traitement de l'air selon l'une quelconque des revendications précédentes, **caractérisé en ce que** les moyens de fixation sont constitués par au moins un organe de prise du réservoir (6) sur la structure filtrante (3).

4. Ensemble filtre/dispositif de traitement de l'air selon la revendication 3, **caractérisé en ce que** ledit organe de prise est constitué d'une attache (9,13) de saisie d'un repli (5) de la structure filtrante (3).

5. Ensemble filtre/dispositif de traitement de l'air selon la revendication 4, **caractérisé en ce que** l'attache (13) est indifféremment du type à pression, du type à pince, du type à organe coopérant d'emboîtement, et/ou du type à clou perforant.

6. Ensemble filtre/dispositif de traitement de l'air selon l'une quelconque des revendications 3 à 5, **caractérisé en ce que** le réservoir (6) est équipé à au moins l'une de ses extrémités d'un dit organe de prise (13).

7. Ensemble filtre/dispositif de traitement de l'air selon l'une quelconque des revendications 3 à 5, **caractérisé en ce que** l'attache (13) est un élément amovible (9) de fixation du réservoir (6) par serrage conjoint de ce dernier (6) et d'un repli (5) de la structure filtrante (3).

8. Ensemble filtre/dispositif de traitement de l'air selon l'une quelconque des revendications 1 et 2, **caractérisé en ce que** les moyens de fixation sont du type par collage (12) du réservoir (6) sur la structure filtrante (3).

9. Ensemble filtre/dispositif de traitement de l'air selon la revendication 8, **caractérisé en ce que** le réservoir (6) est équipé à au moins l'une de ses faces d'un papier adhésif pour sa fixation sur un repli (5) de la structure filtrante (3).

10. Ensemble filtre/dispositif de traitement de l'air selon l'une quelconque des revendications 1 et 2, **caractérisé en ce que** les moyens de fixation sont constitués par au moins un organe de maintien (7,7') du réservoir (6) sur une ossature (4) du filtre (1).

11. Ensemble filtre/dispositif de traitement de l'air selon l'une quelconque des revendications précédentes, **caractérisé en ce que** le réservoir (6) est muni d'une trappe d'accès (11) à son volume intérieur pour le renouvellement de l'agent traitant qu'il contient.

12. Ensemble filtre/dispositif de traitement de l'air selon l'une quelconque des revendications précédentes, **caractérisé en ce que** le réservoir (6) est en matériau microporeux pour sa perméabilité.

13. Ensemble filtre/dispositif de traitement de l'air selon l'une quelconque des revendications 6, 8, 9, 11 et 12, **caractérisé en ce que** l'agent traitant est l'un quelconque au moins des agents à propriétés anti-bactériennes, à propriétés anti-fongicides et/ou à propriétés odorisantes.

14. Ensemble filtre/dispositif de traitement de l'air selon la revendication 13, dans lequel le filtre est de type à particules ou de type combiné.

15. Ensemble filtre/dispositif de traitement de l'air selon la revendication 13 ou 14, dans lequel le filtre comprend une ossature (4) globalement agencée en cadre dans l'évidement duquel s'étend la structure filtrante (3).

## Claims

1. Air treatment device/filter comprising a filter for a heating, ventilation and/or air conditioning installation for a vehicle interior which has a filter structure (3) featuring a plurality of folds (5), **characterised in that** the treatment device is designed to equip the filter (1) and is formed of a tank (6) that is permeable to airborne treatment agents, and which comprises means of fixing the tank (6) onto the filter (1) between the folds of the filter structure (3), wherein the tank (6) is held between two successive folds (5) of the filter structure (3) .

2. Air treatment device/filter according to claim 1, **characterised in that** the tank is positioned inside the filter structure (3) within its internal volume defined by its overall dimensions.

3. Air treatment device/filter of any of the previous claims, **characterised in that** the means of fixing are formed by at least one binding element of the tank (6) onto the filter structure (3).

4. Air treatment device/filter according to claim 3, **characterised in that** said binding element is formed by a binding (9, 13) holding a fold (5) of the filter structure (3).

5. Air treatment device/filter according to claim 4, **characterised in that** said binding (13) is indifferently of the pressure type, of the clamp type, of the meshing element type and/or of the perforating stud type.

6. Air treatment device/filter according to any of claims 3 to 5, **characterised in that** the tank (6) is fitted with on at least one of its ends a said binding element (13).

7. Air treatment device/filter according to any of claims 3 to 5, **characterised in that** the binding (13) is a removable element (9) for attaching the tank (6) by jointly clamping the latter (6) and a fold (5) of the filter structure (3).

8. Air treatment device/filter according to any of claims 1 or 2, **characterised in that** the means for fixing are of the type (12) wherein the tank (6) is glued onto the filter structure (3).

9. Air treatment device/filter according to claim 8, **characterised in that** the tank (6) is fitted on at least one of its faces with an adhesive paper to attach it to a fold (5) of the filter structure (3).

10. Air treatment device/filter according to any of claims 1 or 2, **characterised in that** the means for fixing are formed by at least one element (7, 7') for holding the tank (6) onto a frame (4) of the filter (1).

11. Air treatment device/filter according to any of the previous claims, **characterised in that** the tank (6) is equipped with a panel (11) providing access to its internal volume for the renewal of the treatment agent it contains.

12. Air treatment device/filter according to any of the previous claims, **characterised in that** the tank (6) is made of a micro-porous material in order for it to be permeable.

13. Air treatment device/filter according to any of the claims 6, 8, 9, 11 and 12, **characterised in that** the treatment agent is any of at least the agents with anti-bacterial properties, anti-fungicide properties and/or deodorising properties.

14. Air treatment device/filter according to claim 13, **characterised in that** the filter is of the particle or combined types.

15. Air treatment device/filter according to claims 13 or 14, **characterised in that** the filter comprises a frame (4) that is globally fitted as a structure inside the recess from which the filter structure (3) extends.

## Patentansprüche

1. Zusammenbau aus Filter / Luftbehandlungsvorrichtung umfassend einen Filter einer Heizungs-, Belüftungs- und /oder Klimasteuerungsanlage für den Fahrgastraum eines Fahrzeugs mit einer Filtrierstruktur (3), die mehrere Falten (5) umfasst, **dadurch gekennzeichnet, dass** die Behandlungsvorrichtung dazu bestimmt ist, den Filter (1) auszustatten, und dass sie von einem durchlässigen Behälter (6) mit flüchtigem Behandlungsmittel gebildet wird und Mittel zur Befestigung des Behälters (6) am Filter (1) zwischen den Falten der Filtrierstruktur (3) umfasst, wobei der Behälter (6) zwischen zwei aufeinander folgenden Falten (5) der Filtrierstruktur (3) festgehalten wird.

2. Zusammenbau aus Filter / Luftbehandlungsvorrichtung nach Anspruch 1, **dadurch gekennzeichnet, dass** der Behälter innerhalb der Filtrierstruktur (3) im Raum ihres Innenvolumens, das von ihren Gesamtabmessungen begrenzt wird, angeordnet ist.

3. Zusammenbau aus Filter / Luftbehandlungsvorrichtung nach einem der vorhergehenden Ansprüche, **dadurch gekennzeichnet, dass** die Befestigungsmittel von mindestens einem Eingreiforgan des Behälters (6) in die Filtrierstruktur (3) gebildet werden.

4. Zusammenbau aus Filter / Luftbehandlungsvorrichtung nach Anspruch 3, **dadurch gekennzeichnet, dass** das Eingreiforgan von einer Befestigung (9, 13) zum Ergreifen einer Falte (5) der Filtrierstruktur (3) gebildet wird.

5. Zusammenbau aus Filter / Luftbehandlungsvorrichtung nach Anspruch 4, **dadurch gekennzeichnet, dass** die Befestigung (13) unterschiedslos druckartig, zangenartig, von der Art mit Einrastorgan und / oder von der Art mit durchbohrendem Nagel ist.

6. Zusammenbau aus Filter / Luftbehandlungsvorrichtung nach einem der Ansprüche 3 bis 5, **dadurch gekennzeichnet, dass** der Behälter (6) an mindestens einem seiner Enden mit einem Eingreiforgan (13) ausgestattet ist.

7. Zusammenbau aus Filter / Luftbehandlungsvorrichtung nach einem der Ansprüche 3 bis 5, **dadurch gekennzeichnet, dass** die Befestigung (13) ein abnehmbares Element (9) zur Befestigung des Behälters (6) durch gemeinsames Einklemmen dieses Letzteren (6) und einer Falte (5) der Filtrierstruktur (3) ist.

8. Zusammenbau aus Filter / Luftbehandlungsvorrichtung nach einem der Ansprüche 1 und 2, **dadurch gekennzeichnet, dass** die Befestigungsmittel von der Art sind, bei der der Behälter (6) an der Filtrierstruktur (3) festgeklebt (12) wird.

9. Zusammenbau aus Filter / Luftbehandlungsvorrichtung nach Anspruch 8, **dadurch gekennzeichnet, dass** der Behälter (6) auf mindestens einer seiner Außenseiten mit einem Haftpapier für seine Befestigung an einer Falte (5) der Filtrierstruktur (3) ausgestattet ist.

10. Zusammenbau aus Filter / Luftbehandlungsvorrichtung nach einem der Ansprüche 1 und 2, **dadurch gekennzeichnet, dass** die Befestigungsmittel von mindestens einem Organ zum Festhalten (7, 7') des Behälters (6) an einem Gerüst (4) des Filters (1) gebildet werden.

11. Zusammenbau aus Filter / Luftbehandlungsvorrichtung nach einem der vorhergehenden Ansprüche, **dadurch gekennzeichnet, dass** der Behälter (6) mit einer Zugangsklappe (11) zu seinem Innenvolumen für die Erneuerung des Behandlungsmittels, das er enthält, versehen ist.

12. Zusammenbau aus Filter / Luftbehandlungsvorrichtung nach einem der vorhergehenden Ansprüche, **dadurch gekennzeichnet, dass** der Behälter (6) für seine Durchlässigkeit aus mikroporösem Material hergestellt ist.

13. Zusammenbau aus Filter / Luftbehandlungsvorrichtung nach einem der Ansprüche 6, 8, 9, 11 und 12, **dadurch gekennzeichnet, dass** das Behandlungsmittel mindestens eines von Mitteln mit antibakteriellen Eigenschaften, fungiziden Eigenschaften und / oder duftenden Eigenschaften ist.

14. Zusammenbau aus Filter / Luftbehandlungsvorrichtung nach Anspruch 13, wobei der Filter von der Art mit Partikel oder von kombinierter Art ist.

15. Zusammenbau aus Filter / Luftbehandlungsvorrichtung nach Anspruch 13 oder 14, wobei der Filter ein Gerüst (4) umfasst, das insgesamt als Rahmen in der Aussparung angeordnet ist, von der sich die Filtrierstruktur (3) erstreckt.
